# EUROPEAN PATENT APPLICATION

(11) **EP 4 778 760 A1**
(43) Date of publication of application: **22.07.2026**
(21) Application number: 25152206.6
(22) Date of filing: 16.01.2025
(51) Int. Cl.: B60K 17/16, B60K 1/00, F16H 48/10, F16H 57/04, F16H 57/08

(54) **GEARING FOR A VEHICLE**

(71) Applicant: ZF Friedrichshafen AG, 88046 Friedrichshafen (DE)
(72) Inventor: Wang, Yanghao, Shanghai, 201615 (CN)
(74) Representative: WBH Wachenhausen Patentanwälte PartG mbB

(57) **Abstract**

The invention relates to a gearing (10) for a vehicle (1). The gearing (10) comprises a rotating element (6), a lubricant supply (60), a housing portion (13), a lubrication path (20) and a planetary gear set (70) with multiple planetary gear elements (71, 72, 73, 74, 75, 76). The gearing (10) is configured to supply lubricant from the lubricant supply (60) via the lubrication path (20) through the housing portion (13) to the rotating element (6). The gearing (10) is also configured to supply lubricant from the rotating element (6) via the lubrication path (20) to one of the planetary gear elements (75; 76) for lubrication independently from any rotation of any of the planetary gear elements (71, 72, 73, 74, 75, 76) of the planetary gear set (70). The invention also relates to a vehicle (1) with the gearing (10).

## Description

### Technical field

The present invention relates to a gearing for a vehicle and a vehicle having such a gearing.

### Prior art

Gearings for vehicles are known. In some cases, the gearing is provided with a planetary gear set with multiple elements. In such gearings, lubrication of the elements of the planetary gear set may be necessary. A rotation of an element of the planetary gear set may be used for assisting a lubricant flow towards some elements for lubrication, for example by splashing lubricant into a baffle plate and/or by transporting lubricant via centrifugal forces. Under certain conditions, the rotation may be insufficient for providing an appropriate lubricant flow, for example during high loads at low driving speeds corresponding to low rotational speeds of the elements of the planetary gear set.

### Summary of the invention

The present disclosure relates in a first aspect to a gearing for a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The vehicle may comprise a driving unit for directly or indirectly driving the gearing by applying power thereto. The driving unit may comprise an internal combustion engine and/or an electric motor. The driving unit may receive energy from an energy storage, for example a tank or a battery, and convert it to rotational mechanical energy, for example to a driving power for the gearing. The gearing may comprise an input shaft and one or more output shafts. At least one output shaft of the gearing may be mechanically operatively connected to a drive element of the vehicle. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements. The gearing may be provided as a distribution gearing for distributing power between two output shafts. The gearing may also comprise a differential function. The drive element may be, for example, a wheel for contacting the ground or a drive wheel or sprocket for tracks. The vehicle may comprise a shiftable transmission disposed in a power flow between the driving unit and the drive element.

The gearing comprises a rotating element and a planetary gear set with multiple planetary gear elements. The rotating element may be any element of the gearing configured to rotate in at least one operational state of the vehicle. Examples for the rotating element may include a shaft, for example an input shaft, an output shaft or an intermediate shaft of the gearing, a gear, for example a spur gear, a planetary gear or a bevel gear, and a shifting element, for example a clutch. Examples for the planetary gear elements may include a sun gear, a planetary carrier, a planetary pin, a planetary bearing, a planetary gear and a ring gear. The gearing may comprise more than one planetary gear sets. In case multiple planetary gear sets are present, they may be configured identically or differently from each other.

The gearing comprises a lubricant supply. The lubricant supply may be configured for providing a lubricant for lubricating an element of the gearing. The lubricant may also be configured for a cooling functionality of cooling the element of the gearing. The lubricant may be provided as an oil, for example. The lubricant supply may include elements for supplying the lubricant as a pressurized lubricant. For example, the lubricant supply may comprise a lubricant pump for selectively pressurizing the lubricant. The lubricant pump may be electrically operated and/or mechanically coupled to the driving unit for operation. The lubricant pump may be configured so as to be operable independently from any rotation of the gearing. Alternatively or additionally, the lubricant supply may comprise means other than the lubricant pump for passively pressurizing the lubricant, for example by means of a gravity induced hydrostatic pressure. For example, the lubricant supply may comprise a lubricant tank mounted at a higher level than an entry point of the lubricant into the gearing.

The gearing further comprises a housing portion and a lubrication path. The housing portion may be part of a housing. The housing may be provided as one or several casings for enclosing stationary and/or rotational components of the gearing and/or the driving unit. The housing may also be configured as a stationary member for providing support and for receiving forces and torques. The housing may comprise several detachable housing portions. Each housing portion may be configured to accommodate and support different components. For example, the housing may comprise one or more gearing housing portions for enclosing and rotatably supporting the gearing. For example, the housing may comprise one or more driving unit housing portions for enclosing and rotatably supporting the driving unit. The exemplary housing portions may be mounted to each other or formed integrally with each other. The lubrication path may be formed for providing a fluid communication between the housing portion and the lubricant supply. For example, the lubrication path may comprise one or more channels formed in the housing. Additional elements and sections of the lubrication path will be described further in the following.

The gearing is configured to supply lubricant from the lubricant supply via the lubrication path through the housing portion to the rotating element. The housing portion may be in fluid communication with the lubricant supply via the lubrication path. The housing portion may be configured to transfer lubricant directly or indirectly received from the lubricant supply to the rotating element. The housing portion may be configured, for example, as an element radially interposed between the rotating element and a part of the lubrication path connected to the lubricant supply. A part of the lubrication path may extend through the housing portion. The lubrication path extending through the housing portion may be sealed on both axial sides of the housing portion. In one example, the housing portion may be configured as an annular member arranged radially between the rotating element and the remainder of the housing. The lubricant supply may be in fluid communication with an outside of the housing portion, and the rotating element may be in fluid communication with an inside of the housing portion. The housing portion may comprise at least one opening for guiding lubricant from the radial outside thereof to the radial inside thereof. The housing portion may comprise one or more ring channels formed at the radial outside and/or the radial inside thereof, for example for transferring lubricant when relative rotation is present and/or for spreading lubricant in a circumferential direction.

The gearing is further configured to supply lubricant from the rotating element via the lubrication path to one of the planetary gear elements for lubrication independently from any rotation of any of the planetary gear elements of the planetary gear set. The one of the planetary gear elements may be any of the elements of the planetary gear set described above. The one of the planetary gear elements may be configured for receiving lubricant from the lubrication path. The lubrication path may have a plurality of lubrication path sections. Different lubrication path sections may be formed in different elements. For example, respective lubrication path sections may be formed in the housing, e.g. in the housing portion, in the rotating element, in the one element of the planetary gear set and/or in other cavities or volumes present between at least a pair of elements. The lubricant for lubrication of the one planetary gear element may be passed therefrom to other elements of the gearing, for example to other planetary gear elements. The lubricant for lubrication of the one planetary gear element may be provided by the gearing independently of the rotations, for example rotational speeds, of any of the planetary gear elements. For example, the lubricant may be actively and/or passively pressurized as described above to a pressure level sufficient for overcoming pressure losses along the lubrication path to the one element of the planetary gear set, regardless of the presence and/or speed of element rotations in the planetary gear set.

With the gearing according to the first aspect, the lubricant supply and the lubrication path are provided such that a rotation of the planetary gear set is not necessary for enabling or assisting lubricant flow to the one planetary gear element. Accordingly, it is possible to provide sufficient lubricant to the one planetary gear element even when the planetary gear set is not rotating at all, for example in low speed and high load driving conditions like off-road driving. Furthermore, the supply of lubricant to the one planetary gear element is more stable in other driving conditions, even such conditions, in which lubricant flow is additionally assisted by a rotation of some planetary gear elements. Thus, the gearing of the first aspect achieves proper lubrication throughout a wide range of driving conditions.

In an embodiment, the lubrication path comprises a lubrication path section formed between the rotating element and a further rotating element. The rotating element and the further rotating element may serve as a pair of elements forming the lubrication path section therebetween. The rotating element and the further rotating element may be spaced apart in a region of the lubrication path section such that each of the rotating element and the further rotating element at least partially delimits an extent of the lubrication path section. For example, the further rotating element may be coaxial to the rotating element and may partially extend into the rotating element, such that an annular cavity is formed as the lubrication path section being part of the lubrication path. In such an example, the lubrication path section may be provided across at least a part of a circumference of the further rotating element. At least a portion of the lubrication path section may extend in an axial direction. Alternatively or additionally, at least a portion of the lubrication path section may extend in a radial direction. Alternatively or additionally, at least a portion of the lubrication path section may extend obliquely, namely in a direction having components along both the axial and radial directions.

In an embodiment, the gearing comprises a seal element configured to seal the lubrication path section between the rotating element and the further rotating element so as to guide the lubricant in the lubrication path section towards the one planetary gear element while allowing relative rotation between the rotating element and the further rotating element. The seal element may comprise a portion configured to be in contact with both of the rotating element and the further rotating element so as to inhibit leakage of lubricant therebetween. The seal element may comprise another portion configured to be in contact with one of the rotating element and the further rotating element and to be spaced apart from the other of the rotating element and the further rotating element so as to allow lubricant flow therebetween. The seal element may extend at least partially in a circumferential direction around the axial direction. In one example, the seal element may comprise an annular shape. The seal element may be formed so as to surround the further rotating element on a radially outer side of the further rotating element, and to contact the rotating element on a radially inner side of the rotating element. The seal element may be configured to guide the lubricant by changing a flow direction thereof, for example by deflecting a flow of the lubricant from a substantially radial flow direction to a substantially axial flow direction. For example, the seal element may comprise an angled shape for guiding the lubricant. In one example, the seal element may be formed as a ring element with an L-shaped cross section.

In an embodiment, the seal element comprises an axially facing surface configured to delimit a part of the lubrication path section in an axial direction. For example, the axially facing surface may be configured to face one of the rotating element and the further rotating element at a distance allowing the lubrication path section to extend between the axially facing surface and a surface of the other of the elements opposite to the axially facing surface. The axially facing surface may be provided along at least a part of the circumference of the seal element. In one example, the axially facing surface is provided across the whole circumference of the seal element. Another axially facing surface of the seal element may be formed to face away from the axially facing surface. The other axially facing surface may be in contact with the other of the rotating element and the further rotating element.

In an embodiment, the seal element comprises a radially facing surface configured to delimit a part of the lubrication path section in a radial direction and to seal between the rotating element and the further rotating element. The radially facing surface may be configured to face in a direction of the lubrication path section, for example in the radially inward direction. The radially facing surface may be adjacent to the above-described portion of the seal element configured to be in contact with both of the rotating element and the further rotating element. For example, the radially facing surface may be continuous with a sealing surface contacting one of the rotating element and the further rotating element for sealing. Alternatively, a step may be present between the radially facing surface and the sealing surface.

In an embodiment, the lubrication path comprises a further lubrication path section formed in the further rotating element for receiving lubricant from the lubrication path section and for guiding the received lubricant towards the one planetary gear element. The lubrication path section and the further lubrication path section may be in fluid communication with each other, for example by being directly connected. The further lubrication path section may comprise at least one lubrication path channel extending through the further rotating element. The at least one lubrication path channel may extend in the axial and/or radial directions. For example, a lubrication path channel may open in a direction towards the lubrication path section for receiving lubricant. For example, a further lubrication path channel may open in a direction towards the one planetary gear element for delivering the received lubricant to the one planetary gear element. The two lubrication path channels may be in fluid communication, for example by intersecting each other, for guiding the lubricant from the lubrication path section towards the one planetary gear element.

In an embodiment, the further rotating element is formed as a planetary carrier of the planetary gear set. In an embodiment, the planetary carrier comprises a planetary pin on which the one planetary gear element is mounted. The lubrication path may comprise an additional lubrication path section formed in the planetary pin for receiving lubricant from a section of the lubrication path and for guiding the received lubricant towards the one planetary gear element. For example, the additional lubrication path section may comprise one or more planetary channels extending axially, radially and/or obliquely through the planetary pin. The additional lubrication path section, for example one of the planetary channels, may be configured for fluid communication with the remainder of the lubrication path, for example the further lubrication path section or the lubrication path section. The additional lubrication path section may be configured for guiding the lubricant towards the one planetary gear element by changing its flow direction, for example via the planetary channel or channels. The one planetary gear element, which is to receive lubricant via the lubrication path for lubrication, may comprise at least one of a planetary bearing and a planetary gear. In one example, both a planetary bearing and a planetary gear are provided. In such an example, the planetary pin and the planetary bearing may be configured to enable a flow of at least a part of the lubricant received by the planetary pin to the planetary gear. A further element of the planetary gear set meshing with the planetary gear, for example a sun gear or a ring gear, may also directly or indirectly receive a part of the lubricant from the planetary pin.

In an embodiment, the rotating element is formed as an output shaft. In an embodiment, the planetary carrier is rotatably supported within the output shaft via a bearing arranged in the lubrication path. For example, the bearing may be arranged in the lubrication path section extending at least partially between the rotating element and the further rotating element, namely between the output shaft and the planetary carrier. The bearing may be configured to allow a flow of lubricant therethrough. Alternatively or additionally, bypass channels for allowing a flow of lubricant around the bearing may be provided in at least one of the rotating element and the further rotating element.

In an embodiment, the lubrication path comprises a section extending from an outside of the rotating element to an inside of the rotating element. The section of the lubrication path may be formed as an opening, for example one or multiple radial bores extending through the rotating element. The outside of the rotating element may be configured for receiving lubricant from the lubricant supply. The inside of the rotating element may be configured for forming at least part of the lubrication path. A cavity may be formed within the rotating element and may form or be in fluid communication with at least a part of the lubrication path, for example the lubrication path section described above. The section of the lubrication path may also comprise a part extending through the cavity, for example in an axial direction.

In an embodiment, the lubricant supply comprises a lubricant pump for supplying pressurized lubricant to the rotating element. As described above, the lubricant pump may serve to selectively pressurize the lubricant as necessary. For example, the lubricant may be pressurized independently from any rotation of any element of the planetary gear set. Alternatively or additionally, pressurization by the lubricant pump may be lowered or disabled when an element of the planetary gear set rotates in a manner assisting the flow of lubricant to the one planetary gear element.

In an embodiment, the gearing comprises a first planetary gear set and a second planetary gear set. The first planetary gear set may comprise at least a first element, a second element and a third element. The second planetary gear set may comprise at least a first element, a second element and a third element. An input shaft may be non-rotatably connected to the first element of the first planetary gear set. The second element of the first planetary gear set may be non-rotatably connected to a first output shaft. The third element of the first planetary gear set may be non-rotatably connected to the first element of the second planetary gear set. The second element of the second planetary gear set may be non-rotatably connected to a stationary member. The third element of the second planetary gear set may be non-rotatably connected to a second output shaft. In the present embodiment, the rotating element is formed by one of the output shafts and the one planetary gear element is one of the elements of the first and second planetary gear sets.

A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated. The first, second and third elements, for example, may each be a sun gear, a planetary carrier or a ring gear of the respective planetary gear set. In one example, each first element of the planetary gear sets may be a sun gear, each second element of the planetary gear sets may be a planetary carrier and each third element of the planetary gear sets may be a ring gear. The ring gear of the first planetary gear set may be formed integrally with the sun gear of the second planetary gear set. Thereby, a gearing with compact dimensions can be provided. The respective planetary gear set may be a plus or a minus planetary gear set. Each of the planetary gear sets may have planetary gears that may be rotatably mounted on the respective planetary carrier of the one planetary gear set, for example via planetary pins. The planetary gears may mesh with both the sun gear and the ring gear of the respective planetary gear set.

In an embodiment, the rotating element is formed by the second output shaft, and the further rotating element is formed as the second element of the first planetary gear set. For example, the second element of the first planetary gear set may be formed as a planetary carrier. By means of the present embodiment, a simple and compact structure is achieved.

In a second aspect, the present disclosure relates to a vehicle. The vehicle comprises a gearing according to the first aspect. The respective advantages and further features can be taken from the description of the first aspect, wherein embodiments of the first aspect also form embodiments of the second aspect and vice versa.

### Brief description of drawings

Figure 1 shows a vehicle with a gearing according to an embodiment of the present disclosure.
Figure 2 schematically shows a general layout of the gearing of the vehicle of Figure 1.
Figure 3 schematically shows a gearing with the layout of Figure 2 according to an embodiment.
Figure 4 schematically shows a detail of the gearing of Figure 3.

### Detailed description of embodiments

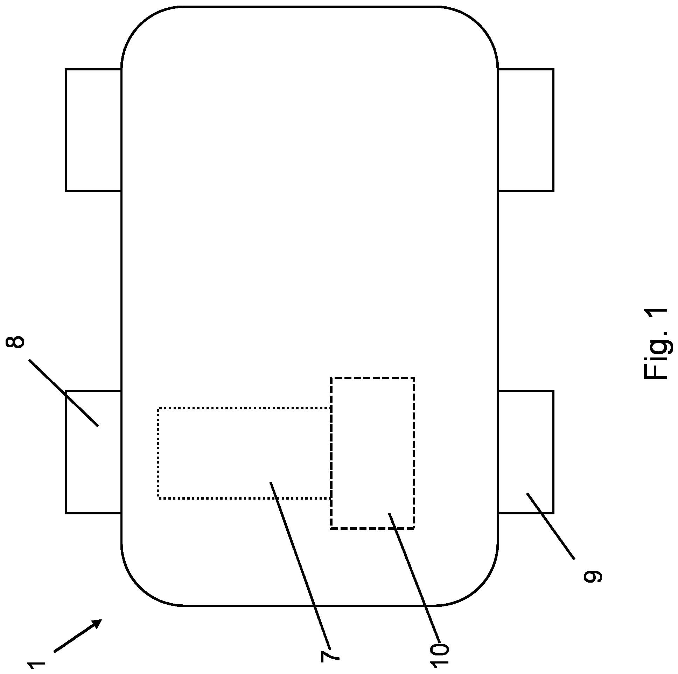

Figure 1 shows a vehicle 1 with a gearing 10 according to an embodiment of the present disclosure. The vehicle 1 is presently formed as a working vehicle. The vehicle 1 comprises a driving unit 7 presently formed as an electric motor. The gearing 10 is configured for transferring power input by the driving unit 7 to at least two drive elements 8, 9 presently formed as wheels.

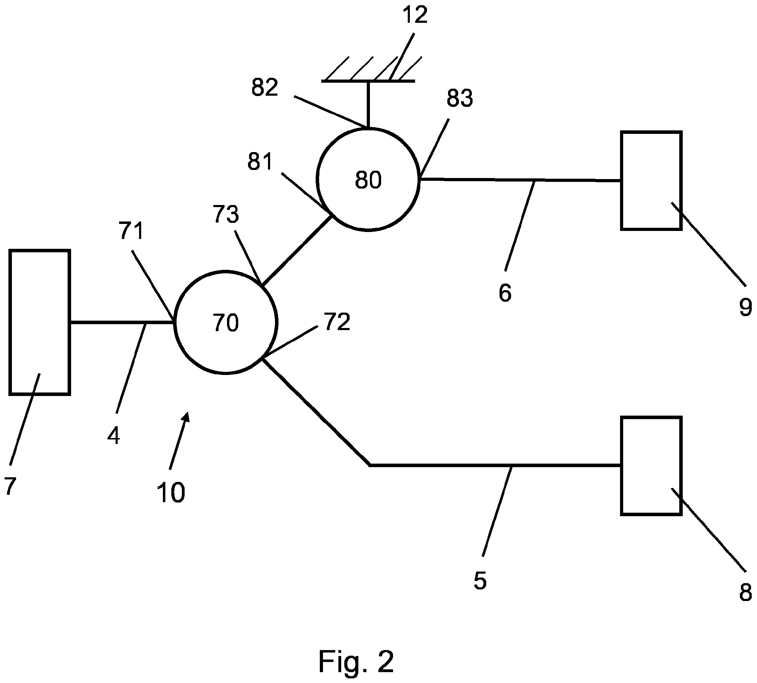

Figure 2 schematically shows a general layout of the gearing 10 according to an embodiment of the present disclosure. In the present embodiment, the gearing 10 is formed as a distribution gearing with two planetary gear sets. As can be seen from Figure 2, the gearing 10 comprises a first planetary gear set 70 having a first element 71, a second element 72 and a third element 73. Furthermore, the gearing 10 comprises a second planetary gear set 80 having a first element 81, a second element 82 and a third element 83. Power generated by the driving unit 7 can be introduced into the gearing 10 via an input shaft 4. The input shaft 4 is mechanically operatively connected to the first element 71 of the first planetary gear set 70, here by being permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member 12, here a housing for accommodating and supporting the first and second planetary gear sets 70, 80. A first output shaft 5 is mechanically operatively connected to the second element 72 of the first planetary gear set 70, in this case permanently non-rotatably connected, for outputting power to a first drive element 8. A second output shaft 6 is mechanically operatively connected to the third element 83 of the second planetary gear set 80, in this case permanently non-rotatably connected, for outputting power to a second drive element 9.

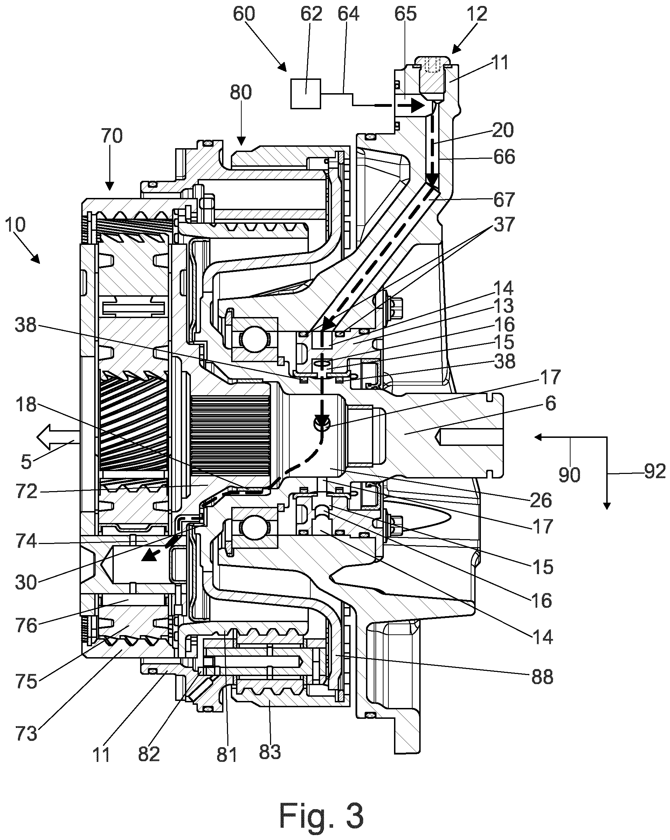

Figure 3 shows a gearing 10 according to an embodiment of the present disclosure. The gearing 10 of the present embodiment is provided according to the general layout shown in Figure 2. In the present embodiment, each of the first elements 71 (not shown in Figure 3), 81 is formed as a sun gear, each of the second elements 72, 82 is formed as a planetary carrier and each of the third elements 73, 83 is formed as a ring gear. Furthermore, the first planetary gear set 70 and the second planetary gear set 80 are offset along an axial direction 90. The first output shaft 5, which is permanently non-rotatably connected to the first planetary carrier 72, is not shown in Figure 3 for the sake of better illustration. The second output shaft 6 is permanently non-rotatably connected to the second ring gear 83 via a coupling element 88. Furthermore, the second output shaft 6 is arranged coaxially to the first output shaft 5 and the first planetary carrier 72. In addition, a part of the first planetary carrier 72 extends into a hollow part of the second output shaft 6 such that an annular passage is formed in a radial direction 92 between the second output shaft 6 and the first planetary carrier 72. In the present embodiment, the first planetary carrier 72 is rotatably supported with respect to the second output shaft 6 by means of a bearing 18 which is presently formed as a needle bearing.

The gearing 10 of the present embodiment comprises means for lubricating at least a planetary gear 75 and a planetary bearing 76 mounted on a planetary pin 74 fixed to the first planetary carrier 72. In the present embodiment, the planetary gear 75 and the planetary bearing 76 each correspond to one element of the planetary gear set 70. In addition, the second output shaft 6 corresponds to a rotating element, and the first planetary carrier 72 corresponds to a further rotating element.

For lubricating the planetary gear 75 and the planetary bearing 76, the gearing 10 comprises a lubricant supply 60 and a lubrication path 20. The lubricant supply 60 is configured to supply a lubricant, namely oil in the present embodiment, at a pressure suitable for providing the lubricant to the planetary gear 75 and the planetary bearing 76 independently from any rotation of any of the elements 71, 72, 73, 81, 82, 83 of the first planetary gear set 70 and the second planetary gear set 80. In the present embodiment, the lubricant supply 60 comprises a lubricant pump 62 connected via a lubricant conduit 64 to the lubrication path 20. The housing 12 comprises a gearing casing 11 accommodating the gearing 10 and a housing portion 13 formed separately from the gearing casing 11 and attached thereto. The lubrication path 20 presently extends to the planetary bearing 76 through the housing 12, here the gearing casing 11 and the housing portion 13, the second output shaft 6, namely a cavity 26 formed in the hollow part of the second output shaft 6, the first planetary carrier 72 and into the planetary pin 74. The planetary bearing 76 is presently formed so as to allow a flow of lubricant therethrough to the planetary gear 75.

An overview of the lubrication path 20 is shown in Figure 3. A first section of the lubrication path 20 extends from the lubrication conduit 64 through supply channels 65, 66, 67 formed in the gearing casing 11 to the housing portion 13. In the present embodiment, when the gearing 10 is mounted in the intended fashion in the vehicle 1, a first supply channel 65 is arranged near an uppermost portion of the gearing casing 11 of the housing 12 and extends in the axial direction 90. A second supply channel 66 in fluid communication with the first supply channel 65 extends in the radial direction 92, here downwards. A third supply channel 67 being in fluid communication with the second supply channel 66 extends obliquely towards the second planetary gear set 80 in accordance with a shape of the gearing casing 11 of the housing 12. The third supply channel 67 opens to the housing portion 13 such that the housing portion 13 receives lubricant from the lubricant supply 60 via the supply channels 65, 66, 67. The housing portion 13 comprises a first ring channel 14 formed on a radially outer side and a second ring channel 15 formed on a radially inner side. Seals 37, 38 are respectively provided on both axial sides of the first ring channel 14 and the second ring channel 15 so as to seal the ring channels 14, 15 with respect to the gearing casing 11 of the housing 12. An opening 16, presently a plurality of openings 16, is formed in the housing portion 13 for providing a fluid communication between the ring channels 14, 15. From the housing portion 13, lubricant is transferred radially inwards to the second output shaft 6. The lubricant received by the second output shaft 6 flows into the cavity 26 of the second output shaft 6 by means of an output shaft opening 17, presently a plurality of output shaft openings 17, formed radially in the second output shaft 6. In the cavity 26 of the second output shaft 6, the lubricant can flow from the output shaft openings 17 in the housing portion 13 to the passage between the first planetary carrier 72 and the second output shaft 6. From said passage, the lubricant can flow along a seal element 30, into and through the first planetary carrier 72, and into the planetary pin 74.

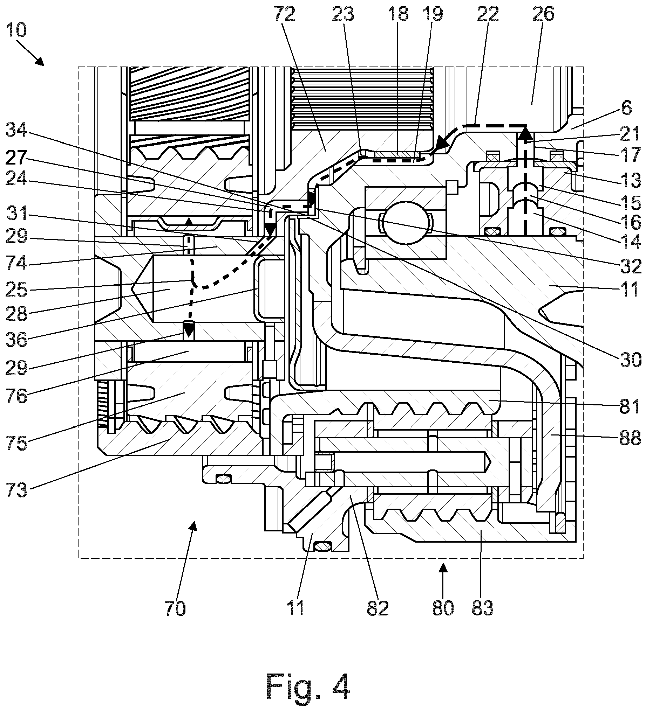

Further details of the lubrication path 20 of the gearing 10 of Figure 3 are shown in a detail view of Figure 4. The lubrication path 20 comprises a plurality of lubrication path sections 21, 22, 23, 24, 25. In a first lubrication path section 21, the lubricant received by the housing portion 13 flows from the first ring channel 14 through the opening 16 of the housing portion 13, the second ring channel 15 and the output shaft openings 17 into the cavity 26 of the second output shaft 6. Within the cavity 26, a second lubrication path section 22 extends in the axial direction 90 towards the first planetary carrier 72. The lubricant flowing along the second lubrication path section 22 enters the passage between the first planetary carrier 72 and the inner side of the second output shaft 6. Said passage forms a third lubrication path section 23. The bearing 18 is arranged in the third lubrication path section 23 of the lubrication path 20. A plurality of bypass channels 19 are formed in the second output shaft 6 extending in the axial direction 90 so as to enable a flow of the lubricant in the third lubrication path section 23 around the bearing 18. At an axial end of the third lubrication path section 23, the lubricant is guided by the seal element 30 into a fourth lubrication path section 24.

The seal element 30 is presently provided as an annular member with an L-shaped cross section. The seal element 30 comprises an axially facing surface 32 distanced from the first planetary carrier 72 so as to allow the third lubrication path section 23 to extend therethrough and to guide the lubricant in the radial direction 92. The seal element 30 also comprises a radially facing surface 34 for deflecting the lubricant towards the axial direction 90. The fourth lubrication path section 24 is presently formed as a lubrication path channel 27 formed in the first planetary carrier 72 and having an axial portion and a radial portion. From the fourth lubrication path section 24, the lubricant is received by the planetary pin 74 via a first planetary channel 31 so as to form a fifth lubrication path section 25 in the planetary pin 74. The first planetary channel 31 extends obliquely and is connected to a second planetary channel 28, which presently extends in the axial direction of the planetary pin 74 and is sealed on one end by a sealing cap 36. A plurality of third planetary channels 29 extend in the radial direction 92 from the second planetary channel 28 to the planetary bearing 76. Accordingly, the lubricant can flow via the fifth lubrication path section 25 of the lubrication path 20 to the planetary bearing 76 and the planetary gear 75.

With the gearing 10 of the present embodiment comprising the lubricant supply 60 and the lubrication path 20 with its sections 21, 22, 23, 24, 25, lubricant can be reliably supplied to the planetary bearing 76 and the planetary gear 75 regardless of any rotation of any of the elements of the planetary gear sets 70, 80. Thereby, stable and reliable lubrication is provided. In particular, the designs of the lubricant pump 62 and the lubrication path 20 are coordinated with each other such that lubrication of the planetary bearing 76 and the planetary gear 75 is possible at low rotational speeds of the planetary gearsets 70, 80 and even at standstill.

### Reference signs

- 1: vehicle
- 4: input shaft
- 5, 6: output shaft
- 7: driving unit
- 8, 9: drive element
- 10: gearing
- 11: gearing casing
- 12: stationary member
- 13: housing portion
- 14, 15: ring channel
- 16, 17: opening
- 18: bearing
- 19: bypass channel
- 20: lubrication path
- 21, 22, 23, 24, 25: lubrication path section
- 26: cavity
- 27: lubrication path channel
- 28, 29, 31: planetary channel
- 30: seal element
- 32: axially facing surface
- 34: radially facing surface
- 36: sealing cap
- 37, 38: seal
- 60: lubricant supply
- 62: lubricant pump
- 64: lubricant conduit
- 65, 66, 67: supply channels
- 70, 80: planetary gear set
- 71, 81: first element
- 72, 82: second element
- 73, 83: third element
- 74: planetary pin
- 75: planetary gear
- 76: planetary bearing
- 88: coupling element
- 90: axial direction
- 92: radial direction

## Claims

1. A gearing (10) for a vehicle (1) comprising a rotating element (6), a lubricant supply (60), a housing portion (13), a lubrication path (20) and a planetary gear set (70) with multiple planetary gear elements (71, 72, 73, 74, 75, 76), wherein the gearing (10) is configured to supply lubricant from the lubricant supply (60) via the lubrication path (20) through the housing portion (13) to the rotating element (6) and from the rotating element (6) via the lubrication path (20) to one of the planetary gear elements (75; 76) for lubrication independently from any rotation of any of the planetary gear elements (71, 72, 73, 74, 75, 76) of the planetary gear set (70).

2. The gearing (10) according to claim 1, **characterized in that** the lubrication path (20) comprises a lubrication path section (23) formed between the rotating element (6) and a further rotating element (72).

3. The gearing (10) according claim 2, **characterized in that** the gearing (10) comprises a seal element (30) configured to seal the lubrication path section (23) between the rotating element (6) and the further rotating element (72) so as to guide the lubricant in the lubrication path section (23) towards the one planetary gear element (75; 76) while allowing relative rotation between the rotating element (6) and the further rotating element (72).

4. The gearing (10) according to claim 3, **characterized in that** the seal element (30) comprises an axially facing surface (32) configured to delimit a part of the lubrication path section (23) in an axial direction (90).

5. The gearing (10) according to claim 3 or 4, **characterized in that** the seal element (30) comprises a radially facing surface (34) configured to delimit a part of the lubrication path section (23) in a radial direction (92) and to seal between the rotating element (6) and the further rotating element (72).

6. The gearing (10) according to any one of claims 2 to 5, **characterized in that** the lubrication path (20) comprises a further lubrication path section (24) formed in the further rotating element (72) for receiving lubricant from the lubrication path section (23) and for guiding the received lubricant towards the one planetary gear element (75; 76).

7. The gearing (10) according to any one of claims 2 to 6, **characterized in that** the further rotating element (72) is formed as a planetary carrier of the planetary gear set (70).

8. The gearing (10) according to claim 7, **characterized in that** the planetary carrier comprises a planetary pin (74) on which the one planetary gear element (75; 76) is mounted, and **in that** the lubrication path (20) comprises an additional lubrication path section (25) formed in the planetary pin (74) for receiving lubricant from a section (24) of lubrication path and for guiding the received lubricant towards the one planetary gear element (75; 76).

9. The gearing (10) according to any one of the preceding claims, **characterized in that** the rotating element (6) is formed as an output shaft.

10. The gearing (10) according to claim 7 or 8 and claim 9, **characterized in that** the planetary carrier is rotatably supported within the output shaft via a bearing (18) arranged in the lubrication path (20).

11. The gearing (10) according to any one of the preceding claims, **characterized in that** the lubrication path (20) comprises a section (21) extending from an outside of the rotating element (6) to an inside of the rotating element (6).

12. The gearing (10) according to any one of the preceding claims, **characterized in that** the lubricant supply (60) comprises a lubricant pump (62) for supplying pressurized lubricant to the rotating element (6).

13. The gearing (10) according to any one of the preceding claims, **characterized in that** the gearing (10) comprises a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein an input shaft (4) is non-rotatably connected to the first element (71) of the first planetary gear set (70), the second element (72) of the first planetary gear set (70) is non-rotatably connected to a first output shaft (5), the third element (73) of the first planetary gear set (70) is non-rotatably connected to the first element (81) of the second planetary gear set (80), the second element (82) of the second planetary gear set (80) is non-rotatably connected to a stationary member (12), and the third element (83) of the second planetary gear set (80) is non-rotatably connected to a second output shaft (6), wherein the rotating element (6) is formed by one of the output shafts (5; 6) and the one planetary gear element (75; 76) is one of the elements (71, 72, 73, 74, 75, 76, 81, 82, 83) of the first and second planetary gear sets (70, 80).

14. The gearing (10) according to claim 13, **characterized in that** the rotating element (6) is formed by the second output shaft (6) and the further rotating element (72) is formed as the second element (72) of the first planetary gear set (70).

15. A vehicle (1) comprising a gearing (10) according to any one of the preceding claims.
